# EUROPEAN PATENT APPLICATION

(11) **EP 4 556 899 A1**
(43) Date of publication of application: **21.05.2025**
(21) Application number: 23210151.9
(22) Date of filing: 15.11.2023
(51) Int. Cl.: G01N 23/20008

(54) **THIN FILM X-RAY ANALYSIS APPARATUS**

(71) Applicant: Malvern Panalytical B.V., 7602 EA Almelo (NL)
(72) Inventor: Gortemaker, Christopher, 7600 Almelo (NL); Pals, Mark, 7600 Almelo (NL)
(74) Representative: Elkington and Fife LLP

(57) **Abstract**

The present invention relates to an X-ray analysis apparatus for analysing a sample. The X-ray analysis apparatus includes a first roller and a second roller. The first roller and the second roller form a film plane along which a thin film passes. The apparatus comprises an X-ray source for irradiating a sample with X-rays and a detector configured to detect X-rays. The X-ray source is configured, in operation, to project X-rays to a work area between the first and second rollers and being positioned, in operation on a first side of the film plane. The apparatus further comprises a first side wall and a second side wall. The first side wall is positioned on a second, opposite, side of the film plane, to the X-ray source and is arranged between the work area and the first roller. The second side wall is also positioned on a second, opposite, side of the film plane to the X-ray source and is arranged between the work area and the second roller.

## Description

### FIELD OF THE INVENTION

The present invention relates to an apparatus and method for X-ray analysis. In particular, embodiments relate to an X-ray analysis apparatus of thin films.

### BACKGROUND

X-ray analysis methods can be used to characterise materials. Thin film X-ray analysis is a technique used to study the atomic and molecular structure of materials, in particular crystalline materials. A thin film of the material to be inspected is prepared and then irradiated with X-rays and the resulting signals then detected. Generally, two forms of signals can be detected and these detection methods are known as X-ray diffraction or X-ray fluorescence. In X-ray diffraction, the material scatters the X-rays and results in a diffraction pattern which is detected and can then be analysed to determine information about the crystal structure. In X-ray diffraction a detector is positioned at a location to which diffracted X-rays will be directed i.e. on the same side of the thin film as the X-ray source. In X-ray fluorescence, the material emits characteristic fluorescent X-rays which are then detected. In fluorescence a detector may be positioned on the other side of the film from the X-ray source.

Information which can be determined from the detected X-rays include material content, the spacing between crystal planes, the orientation of crystal planes, information about the unit cell and other lattice parameters. This analysis can be used to study layers of materials, investigate changes in crystal structure, for example under different conditions.

In industrial applications, thin film X-ray analysis is a non-destructive method of identifying defects, determining material thickness and assessing the content and properties of a material. In particular, it can be used in the quality control of materials to ensure that the material fulfils specific quality criteria. It can also be used to detect defects, cracks or inconsistencies in materials.

Thin film X-ray analysis is also used to determine the thickness and uniformity of layers such as in the production of photovoltaic cells. Finally, thin film X-ray analysis can be used to analyse the structural properties and composition of materials such as semiconductors and other advanced materials used in electronic applications.

Roll-to-roll X-ray is a thin film X-ray analysis method which involves the continuous X-ray inspection of materials on a roll of thin film. This is particularly useful in scenarios in which quality control and non-destructive testing are essential and examples of these include flexible electronics and membranes. Roll-to-roll X-ray analysis ensures the quality and consistency of the materials being processed without interrupting the production line.

One particular industrial application of roll-to-roll X-ray analysis methods and apparatus is in the production of catalyst-coated polymer electrolyte membranes in fuel cells. The electrocatalysts are capital intensive and inconsistent application, for example too much or too little of the active element, either wastes valuable resources or renders the catalyst ineffective. Careful monitoring of the material results in higher quality products and improved cost control.

The use of roll-to-roll X-ray analysis in scenarios such as the manufacture of membranes in fuel cells allows real-time monitoring of the materials for enhanced process control. The regular analysis means that material composition and loading are continually optimised which minimises off-specification production and maximises cost efficiencies.

However, due to the nature of the thin film, some of the X-rays will pass through the thin film. It is undesirable for these to be reflected back and detected by the detector as this may distort the detection results.

Accordingly, there is a need to provide an improved thin film X-ray analysis apparatus that minimises reflection of X-rays after passing through the thin film.

### SUMMARY

According to an aspect of the invention, there is provided a thin film X-ray analysis apparatus comprising:
a first roller;
a second roller, the first roller and the second roller forming a film plane along which a thin film passes;
an X-ray source for irradiating a sample with X-rays and configured, in operation, to project X-rays to a work area between the first and second rollers and being positioned, in operation, on a first side of the film plane;
a detector configured to detect X-rays;
a first side wall, positioned on a second, opposite, side of the film plane to the X-ray source, the first side wall being arranged between the work area and the first roller, the first side wall having a first end proximal the film plane and a second end distal from the film plane; and
a second side wall also positioned on a second, opposite side of the film plane to the X-ray source, the second side wall being arranged between the work area and the second roller, the second side wall having a first end proximal the film plane and a second end distal from the film plane.

X-rays which pass through the thin film are therefore contained between the first and second side walls and reduced or prevented from being reflected directly back to the detector. By preventing the X-rays from being reflected back to the detector, the signal received at the detector is uncontaminated and a more accurate result is obtained. The first and second side walls form an anti-backscatter device which prevents backscatter back through the thin film and to the detector.

In some embodiments, the apparatus may further comprise a grating positioned between the first and second side walls and in the path of the X-rays. The grating scatters the X-rays to prevent a coherent beam from being reflected back to the detector. The grating is preferably made of metal.

The grating preferably extends between the first and second walls so that substantially all the X-rays between the first and second walls are scattered by the grating.

The first ends of the first and second side walls may be a maximum of 30mm from the film plane. Indeed, preferably, the first ends of the first and second side walls are a maximum of 10mm or 5mm from the film plane. With the first ends of the first and second side walls being positioned close to the film plane in which the thin film lies, the passage of X-rays in the gap between the film and the first ends of the first and second side walls is minimised.

The side walls may be made of metal as this provides an effective barrier to the X-rays. However, any material which provides a barrier to the X-rays may be utilised.

In some embodiments, the first ends of the first and second side walls are at a first distance from each other and the second ends of the first and second side walls are at a second distance from each other and the second distance is greater than the first distance. Such a tapered arrangement can reduce or prevent the X-rays from hitting the side walls (thus minimising backscatter) and allow the X-rays to pass towards the second ends of the first and second side walls.

In particular, the second distance may be at least 20% greater than the first distance.

The first side wall and the second side wall preferably form an angle of less than 80° with the film plane with the respective second ends of the first and second side walls being further apart than the respective first ends of the first and second side walls.

The first and second side walls may form part of an enclosure, also comprising a base.

The X-rays emitted by the X-ray source have a range of angles relative to the film plane and wherein the side walls form a smaller angle with the film plane than the smallest angle formed by the X-rays. This arrangement in particular ensures that X-rays are incident on any base or grating rather than the sides of the enclosure.

The first and second walls may form part of an enclosure, the enclosure further comprising a base formed between the second ends of the first and second side walls.

The enclosure may also have a base. In some embodiments the side walls may form an angle of less than 80° with the base of the enclosure (relative to the space between the side walls). This is a tapered arrangement which, as described above, can reduce or prevent the X-rays from hitting the side walls of the enclosure first (thus reducing or preventing the possibility of backscatter to the detector). Additionally, the angled side walls can assist in reducing backscatter from the base reaching the detector, as the side walls essentially trap or contain the backscatter.

The apparatus may further comprise a substantially sealed housing configured to contain the first roller, the second roller, the X-ray source, the detector and the first and second side walls.

The apparatus may further comprise a thin film arranged along the film plane between the first and second rollers. The material to be studied is deposited on the thin film, which is then extended across the first and second rollers so that the material on the film can be irradiated and examined.

According to the invention there is provided a method of conducting thin film X-ray analysis. The method comprises providing a thin film X-ray analysis apparatus, the apparatus comprising: a first roller and a second roller, the first roller and the second roller forming a film plane along which a thin film passes; an X-ray source for irradiating a sample with X-rays and configured, in operation, to project X-rays to a work area between the first and second rollers and being positioned, in operation, on a first side of the film plane; a detector configured to detect X-rays; a first side wall, positioned on a second, opposite, side of the film plane to the X-ray source, the first side wall being arranged between the work area and the first roller, the first side wall having a first end proximal the film plane and a second end distal from the film plane; and a second side wall also positioned on the second, opposite, side of the film plane to the X-ray source, the second side wall being arranged between the work area and the second roller, the second side wall having a first end proximal the film plane and a second end distal from the film plane. The method further comprises providing a thin film in the thin film plane, irradiating at least a portion of the work area using the X-ray source and detecting, by the detector, scattered X-rays.

Scattered X-rays can include diffracted X-rays and also emitted X-rays by, for example, fluorescence.

### BRIEF DESCRIPTION OF THE DRAWINGS

Embodiments of the present invention will now be described, by way of example, with reference to the accompanying drawings, in which:
Figure 1 is a schematic diagram illustrating a roll-to-roll X-ray analysis apparatus according to the prior art;
Figure 2 is a schematic diagram illustrating a portion of an X-ray analysis apparatus according to an embodiment of the invention;
Figure 3 is a schematic diagram illustrating a portion of an X-ray analysis apparatus according to another embodiment of the invention;
Figure 4 is a schematic diagram illustrating a portion of an X-ray analysis apparatus according to another embodiment of the invention;
Figure 5 is a schematic diagram illustrating a portion of an X-ray analysis apparatus according to another embodiment of the invention;
Figure 6 is a schematic diagram illustrating a portion of an X-ray analysis apparatus according to another embodiment of the invention; and
Figure 7 is a schematic diagram illustrating a portion of an X-ray analysis apparatus according to another embodiment of the invention.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

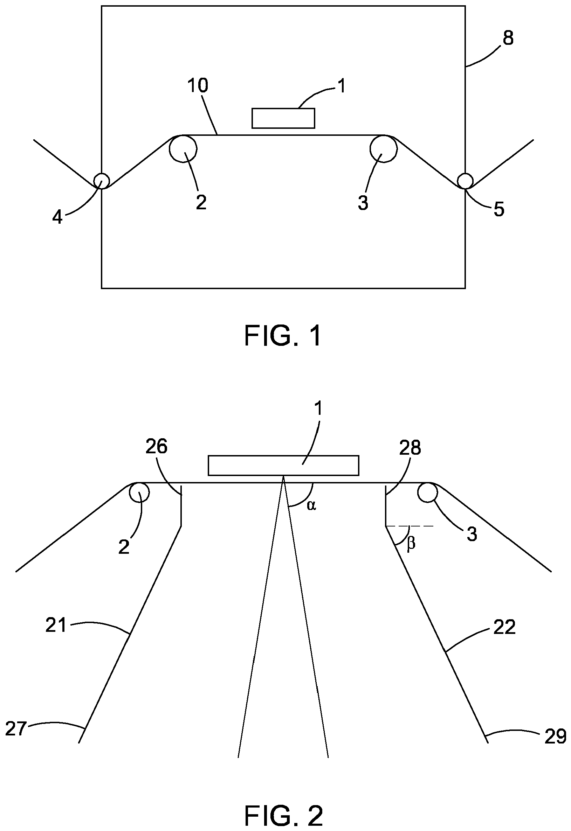

Figure 1 depicts a prior art roll-to-roll X-ray apparatus. As can be seen there is a thin film 10 which is extended across a plurality of rollers 4, 2, 3, 5. The rollers can facilitate movement of the thin film 10 which is driven by a roller elsewhere. Alternatively, one or more of the rollers may be driving rollers which drive the thin film.

The apparatus comprises an X-ray source 1, which generates X-rays. The X-ray source includes a cathode and an anode enclosed in a sealed housing. In use, the cathode emits an electron beam which is incident on a target surface of the anode, thereby irradiating an irradiated area of the anode.

The anode is configured to emit X-rays. The housing includes a window arranged to allow some X-rays emitted by the anode to exit the housing as a beam of X-rays. The X-ray source may further comprise an X-ray optic arranged to receive X-rays from the X-ray source.

The top side of the rollers 2 and 3 form a film plane, along which the film passes. X-rays emitted by the source 1 are incident upon a work area of the thin film within the film plane. At the thin film the X-rays are scattered and/or reflected by and/or transmitted through the sample material (thin film). The scattered and/or reflected X-rays are then detected by a detector (not depicted). The detected results can be analysed to determine, for example, the thickness of, or inconsistencies in, the material deposited on the thin film, any defect in the material, etc. The detector may form part of a single unit with the X-ray source, or may be separate.

The X-rays may operate continuously to obtain data about the sample continuously or they may operate periodically to obtain information from, for example, each distinct manufactured unit.

The X-ray source and the rollers are located in a housing 8, which serves to contain the X-rays. The thin film enters through a thin slit on one side of the housing and exits through a thin slit on the opposite side of the housing. The housing may have a door which can (when not in operation) be opened in order to arrange the thin film initially.

Figure 2 depicts an apparatus according to an embodiment of the invention, in which the X-ray source 1 and detector, together with the first roller 2 and second roller 3 are present. As can be seen, there is a first side wall 21 and a second side wall 22. The first side wall has a first end 26 proximal the film plane and a second end 27 distal the film plane. The second side wall 22 has a first end 28 proximal the film plane and a second end 29 distal the film plane.

The first and second side walls serve to contain the X-rays which are transmitted through the film so they are not transmitted back through the thin film to the detector. The first ends 26, 28 are preferably a maximum 30mm from the film plane along the length of the work area, and preferably a maximum of 10mm and most preferably a maximum of 5mm from the film plane along the length of the work area. Arranging the side walls close to the film plane prevents X-rays from escaping. The side walls should be arranged close to the film plane along at least the length of the work area.

The side walls are made of metal, in particular lead and therefore the X-rays cannot pass through. However, they may be made of any material through which X-rays cannot pass.

The X-rays are projected from the X-ray source 1 to the work area. At the work area some of the X-rays are reflected towards a detector. However, as can be seen, some of the X-rays pass through the thin film, forming a minimum angle of α with the film plane. The X-rays pass between the first side wall 21 and the second side wall 22.

The side walls 21, 22 have a portion which is perpendicular to the film plane and a portion which is at a non-perpendicular angle to the film plane. The non-perpendicular portion forms an angle β with the film plane. The angle β is preferably less than the angle α which ensures that the X-rays are not incident on the side walls and instead pass towards the second ends of the first and second side walls. Furthermore, the angle β is preferably less than 80°.

As a consequence of the tapered side walls the distance between the first end of the first side wall and the first end of the second side wall is less than the distance between the second end of the first side wall and the second end of the second side wall. The distance between the second ends 27, 29 of the first 21 and second 22 side walls is preferably at least 20% greater than the distance between the first ends 26, 28 of the first 21 and second 22 side walls.

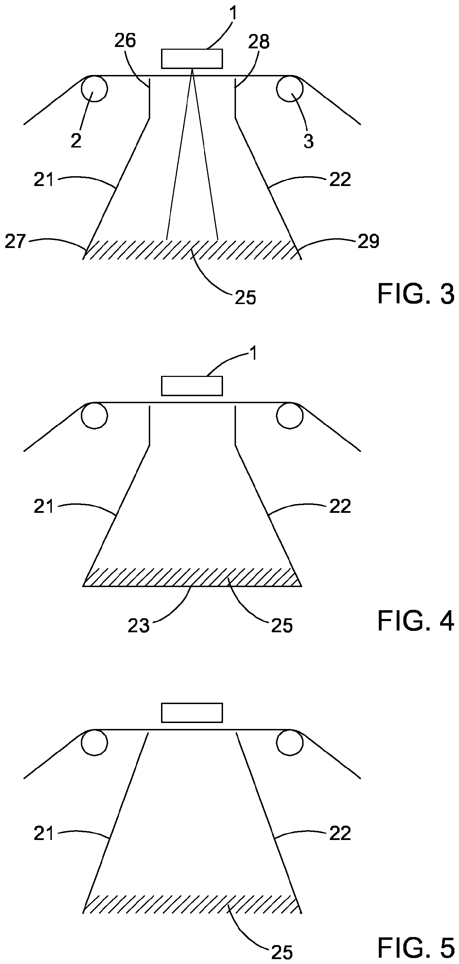

Figure 3 depicts an alternative embodiment. In addition to the features depicted in Figure 2 there is a grating 25 positioned between the first and second walls. The grating preferably extends all the way between the first and second walls. The grating scatters any X-rays so that no coherent beam is reflected back to the detector. The grating is preferably made of metal.

Figure 4 depicts an alternative embodiment of the invention, in which the side walls 21, 22 are the same shape as shown in Figures 2 and 3, but form part of an enclosure with a base 23. This embodiment shows the enclosure with a grating arranged on the base 23, however those skilled in the art will appreciate that the grating is an optional feature.

Figure 5 depicts an alternative arrangement of side walls 21, 22 in which the side walls are tapered along their full length. This results in a greater distance between the second ends 27, 29 of the first 21 and second 22 side walls and consequently the grating 25 is wider.

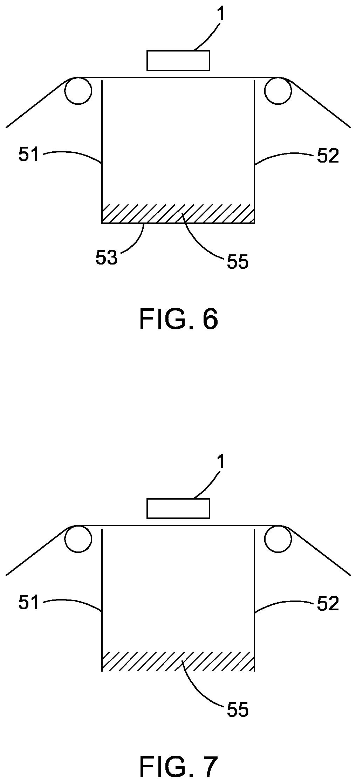

An alternative arrangement is depicted in Figure 6 in which the side walls 51, 52 are not tapered and are instead perpendicular to the film plane. Similarly to the arrangement depicted in Figure 4, the side walls form part of an enclosure with a base 53. Positioned on the base 53 is a grating 55.

Figure 7 depicts an alternative embodiment of the invention with side walls 51, 52 which are perpendicular to the film plane. In contrast to Figure 6 there is no base, but a grating 55 extends between the second ends of the first and second side walls.

For simplicity, the rollers 4, 5 and housing 8 are not depicted in Figures 2 to 7 although they are still present.
"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments which are described.

It will further be appreciated by those skilled in the art that although the invention has been described by way of example with reference to several embodiments, it is not limited to the disclosed embodiments and that alternative embodiments could be constructed without departing from the scope of the invention as defined in the appended claims.

## Claims

1. A thin film X-ray analysis apparatus comprising:
a first roller;
a second roller, the first roller and the second roller forming a film plane along which a thin film passes;
an X-ray source for irradiating a sample with X-rays and configured, in operation, to project X-rays to a work area between the first and second rollers and being positioned, in operation, on a first side of the film plane;
a detector configured to detect X-rays;
a first side wall, positioned on a second, opposite, side of the film plane to the X-ray source, the first side wall being arranged between the work area and the first roller, the first side wall having a first end proximal the film plane and a second end distal from the film plane; and
a second side wall also positioned on the second, opposite, side of the film plane to the X-ray source, the second side wall being arranged between the work area and the second roller, the second side wall having a first end proximal the film plane and a second end distal from the film plane.

2. The thin film X-ray analysis apparatus according to claim 1 further comprising a grating positioned between the first and second side walls and in the path of the X-rays.

3. The thin film X-ray analysis apparatus according to claim 2 wherein the grating is a metal grating.

4. The thin film X-ray analysis apparatus according to either claim 2 or claim 3 wherein the grating extends between the first and second side walls.

5. The thin film X-ray analysis apparatus according to any one of the preceding claims wherein the first end of the first side wall is a maximum of 30mm from the film plane along the length of the work area.

6. The thin film X-ray analysis apparatus according to any one of the preceding claims wherein the first end of the second side wall is a maximum of 30mm from the film plane along the length of the work area.

7. The thin film X-ray analysis apparatus according to any one of the preceding claims wherein the first side wall and the second side wall are made of metal.

8. The thin film X-ray analysis apparatus according to any one of the preceding claims wherein the first ends of the first and second side walls are at a first distance from each other and the second ends of the first and second side walls are at a second distance from each other and the second distance is greater than the first distance.

9. The thin film X-ray analysis apparatus according to claim 8 wherein the second distance is at least 20% greater than the first distance.

10. The thin film X-ray analysis apparatus according to any one of the preceding claims wherein the first side wall and the second side wall form an angle of less than 80° with the film plane, the respective second ends of the first and second side walls being further apart than the respective first ends of the first and second side walls.

11. The thin film X-ray analysis apparatus according to any one of the preceding claims wherein the X-rays emitted by the X-ray source have a range of angles relative to the film plane and wherein the first and second side walls form a smaller angle with the film plane than the smallest angle formed by the X-rays with the film plane.

12. The thin film X-ray analysis apparatus according to any one of the preceding claims wherein the first and second side walls form part of an enclosure, the enclosure further comprising a base formed between the second ends of the first and second side walls.

13. The thin film X-ray analysis apparatus according to any one of the preceding claims, further comprising a substantially sealed housing configured to contain the first roller, the second roller, the X-ray source, the detector and the first and second side walls.

14. The thin film X-ray analysis apparatus according to any one of the preceding claims further comprising a thin film arranged along the film plane between the first and second rollers.

15. A method of conducting thin film X-ray analysis comprising:
providing a thin film X-ray analysis apparatus comprising:
a first roller and a second roller, the first roller and the second roller forming a film plane along which a thin film passes;
an X-ray source for irradiating a sample with X-rays and configured, in operation, to project X-rays to a work area between the first and second rollers and being positioned, in operation, on a first side of the film plane;
a detector configured to detect X-rays;
a first side wall, positioned on a second, opposite, side of the film plane to the X-ray source, the first side wall being arranged between the work area and the first roller, the first side wall having a first end proximal the film plane and a second end distal from the film plane; and
a second side wall also positioned on the second, opposite, side of the film plane to the X-ray source, the second side wall being arranged between the work area and the second roller, the second side wall having a first end proximal the film plane and a second end distal from the film plane,
providing a thin film in the thin film plane;
irradiating at least a portion of the work area using the X-ray source; and
detecting, by the detector, scattered X-rays.
